# EUROPEAN PATENT SPECIFICATION

(11) **EP 4 132 297 B1**
(45) Date of publication and mention of the grant of the patent: **08.11.2023**
(21) Application number: 22724781.4
(22) Date of filing: 25.04.2022
(51) Int. Cl.: A23L 17/10, A23L 17/00, A23J 3/22, A23L 33/185

(54) **FISH ANALOGUE**
FISCHANALOG
ANALOGUE DE POISSON

(30) Priority: 26.04.2021 GB 202105921
(43) Date of publication of application: 15.02.2023
(73) Proprietor: Nomad Foods Europe Limited, Feltham, Middlesex TW14 8HA (GB)
(72) Inventor: CALVER, Stephanie, London Middlesex TW14 8HA (GB); DURANT, Jonathan, London Middlesex TW14 8HA (GB)
(74) Representative: Haseltine Lake Kempner LLP
(86) International application number: PCT/EP2022/060910
(87) International publication number: WO 2022/229106

(56) References cited:
- WO-A1-2010/126563
- Jos Hugense: "Professional high volume production of processed vegan fishless products", , 7 October 2020 (2020-10-07), XP55947618, Retrieved from the Internet: URL:https://www.youtube.com/watch?v=I1odBN HBP10 [retrieved on 2022-07-27]
- KAZIR MEITAL ET AL: "Plant-Based Seafood Analogs", MOLECULES, vol. 26, no. 6, 12 March 2021 (2021-03-12) , page 1559, XP055886013, DOI: 10.3390/molecules26061559

## Description

### Technical Field

The present invention relates to a fish analogue, a method of producing the same and to a food product comprising the fish analogue and a batter layer or crumb layer coating, as defined by the appended claims. The present invention also relates to the use of wheat gluten to increase the protein content of a fish analogue, as defined in the appended claims.

### Background

Growing numbers of people are choosing to eat a vegetarian or vegan diet. This is because plant-based products are often considered to be more environmentally friendly and sustainable compared to meat or fish products. There are also proposed health benefits associated with eating a plant-based diet, as well as the potential positive impact on the climate and on animal welfare.

Currently available plant-based foods often do not provide adequate nutrition for those wishing to fully or partially remove animal or fish products from their diet. Many do not contain a comparable macronutrient profile to meat or fish, such as protein; which plays a vital role in the development and maintenance of human muscle tissue.

Furthermore, existing fish substitute products also do not adequately resemble fish products, and are therefore unappealing to consumers. In particular, there are no fish substitute products or fish analogues that are suitable for vegetarians and vegans which have a texture and colour suitably replicating that of white fish. Often the succulence is also incomparable.

The video link https://www.youtube.com/watch?v=I1odBNHBP1 0 relates to fried, breaded and battered fish analogue patties having a tasty, juicy and really fish-like texture, made from a dough of textured rice flakes, to which a binding system and plant-based fish aroma flavour is added.The review article by Kazir Meital and Livney Yoav D.: "Plant-Based Seafood Analogs", MOLECULES, vol. 26, 12 March 2021, DOI: 10.3390/molecules26061559 relates to the development of plant-based analogues that mimic the texture and sensorial properties of fish-meat, seafood or processed fish products. WO2010/126563A1 relates to flaked fish analogues having a realistic fish-like appearance and texture.

There is therefore a need to provide a fish analogue or fish substitute which is suitable for vegetarians and vegans that has a similar or improved nutritional profile. There is also a need to provide an improved fish analogue which has the texture and colour of white fish.

### Summary of the invention

The present invention solves this problem by providing a food product that is plant-based and mimics white fish, as defined in the appended claims.

In accordance with the first aspect of this invention, there is provided a fish analogue comprising from 50% to 70% by weight textured rice flake, and from 7% to 20% by weight wheat gluten, and wherein the fish analogue does not comprise an ingredient from an animal origin.

The present invention, or embodiments thereof, may have one or more of the following advantages over and above the prior art.
- The fish analogue of the present invention has good textural properties with a flaky texture that resembles white fish while additionally having a source of protein claim. This improved texture, resembling white fish, was not observed with other plant protein products;
- The fish analogue of the present invention had good cohesion and succulent mouthfeel. In particular the use of wheat gluten, optionally in combination with plant fibre, is found to effectively bind all the components of the fish analogue together;
- The fish analogue of the present invention is white in colour, resembling white fish. This was not achieved using other plant protein products, which instead may lead to an analogue with a darker beige colour;
- The fish analogue of the present invention can have a good nutritional profile, with a source of protein claim. The fish analogue may have an improved protein content as compared to other fish analogues.
- The fish analogue of the present invention is free of animal-derived products and is therefore suitable for consumers with a vegan or vegetarian diet;
- The fish analogue of the present invention can be free of chemically modified cellulose-derived products or modified starches, providing a label-friendly product;
- The fish analogue of the present invention is suitable for chilling or freezing;
- The fish analogue of the present invention can be free of mycoprotein or fungus-derived proteins, soy protein or nuts, which may otherwise cause an allergic reaction;
- The fish analogue of the present invention may provide a source of omega-3 fatty acids to more closely emulate the nutritional benefits obtained from eating white fish;
- The fish analogue of the present invention may be free of palm oil thereby providing a healthier product that is low in saturated fats.

In a second aspect of the present invention, there is provided a food product comprising the fish analogue according to the first aspect and a coating, wherein the coating is selected from a coating comprising a batter layer or a coating comprising a crumb layer.

In a third aspect of the invention, there is provided a method of producing a fish analogue that does not comprise an ingredient from an animal origin as described herein, the method comprising:
(a) mixing together plant-based oil, flavourings and water until evenly distributed,
(b) adding wheat gluten and optionally plant fibre and mixing until evenly distributed and an emulsion is formed,
(c) adding textured rice flake and mixing,
wherein the fish analogue comprises from 50% to 70% by weight textured rice flake, and from 7% to 20% by weight wheat gluten The present inventors found that the order of mixing steps could be important. In particular, pre-blending the mixture with wheat gluten and optionally plant fibre, before adding the textured rice flake, provided a fish analogue with a lighter and more acceptable texture. In some embodiments, steps (b) and (c) occur in a bowl chopper. The mixing of components in a bowl chopper is found to be more effective as compared to other apparatus, such as a paddle stirrer. This is because bowl choppers offer an advantage over other systems because the mixing and comminution step can be accomplished in one operation. In some embodiments, steps (b) and (c) occur at a temperature of -10 to 10 °C. A low temperature for steps (b) and/or (c) can i) minimise moisture uptake of the textured rice flake, ii) reduce or prevent the mixture from sticking to the machinery, iii) contribute to the formation of a product with a good texture, and iv) is beneficial for reasons of microbiological control.

In a fourth aspect of the present invention, there is provided use of wheat gluten to increase the protein content of a fish analogue that does not comprise an ingredient from an animal origin, the use comprising
(a) adding wheat gluten and optionally plant fibre to a pre-blend mix comprising plant oil, flavourings and water,
(b) blending mixture from (a) to form an emulsion, and
(c) adding textured rice flake,
(d) blending mixture from (c), and
(e) forming the mixture into fish analogue units,
wherein the fish analogue comprises from 7% to 20% by weight of the wheat gluten and the protein content is at least 7.5% by weight of the fish analogue. Wheat gluten can be used to improve the nutritional profile of the fish analogues described herein.

### Brief Description of Figures

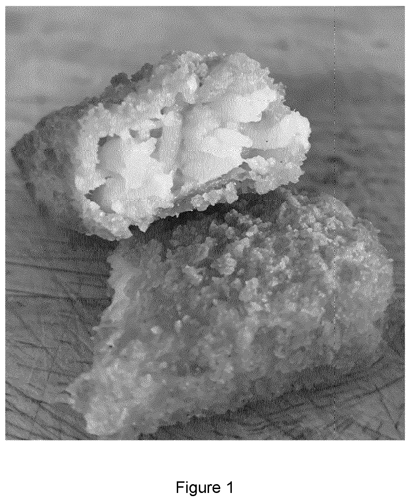

Figure 1 is a photograph showing an example food product of the present invention, comprising an example fish analogue of the present invention.

### Detailed description

The presently-disclosed subject matter is illustrated by specific embodiments or examples throughout this description. Each example is provided by way of explanation of the present disclosure.

While the following terms used herein are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs.

All percentages in the present disclosure are listed as percent by weight on the total weight of the fish analogue, unless explicitly noted otherwise.

The fish analogue according to the present invention comprises textured rice flake and wheat gluten, as defined in the appended claims.

"Fish analogue" referred to herein refers to a fishless substance that is designed to resemble fish. Fish analogue may otherwise be referred to as a vegetarian fish product, a vegan fish product, a fish substitute, a fish extender, mock fish or imitation fish. Fish analogue described herein refers to the "core" of the food product, i.e., an uncoated food product.

"Plant-based" or "plant" referred to herein indicates that the product or component derives from plant and comprises no animal-derived product, for example, no meat or dairy product.

### Textured rice flake

Textured rice flake referred to herein refers to a rice product that is in the form of textured individual pieces. The pieces have a varied size and shape distribution. It is preferred that the pieces have a length in the size range 2-20 mm ± 10%. Textured rice flake comprises rice, water and optionally an emulsifier. In some embodiments, the emulsifier comprises seaweed extract or alginate. Textured rice flake can be formed by mixing rice starch with water and optionally an emulsifier using a hydrocolloid process, producing flakes of varied piece sizes. In one embodiment the material may then be frozen to produce the finished product. In one embodiment the material may undergo a drying process to produce a dehydrated format. Textured rice flake is distinct from rice flour, rice protein isolate or rice bran. Textured rice flake may be used interchangeably with the term rice flake.

Textured rice flake is well-known in the art and can be obtained from commercial sources, for example, from Meatless (https://www.meatless.nl/). Textured rice flake may be obtained frozen or dehydrated.

Textured rice flake is selected for the fish analogue of the present invention because it is white or very pale in colour which assists in mimicking the appearance of white fish. The rice flake used in the present invention is as textured individual pieces. The size and shape distribution also assists in mimicking the texture of white fish. The textured rice flake enhances the colour and the texture of the fish analogue.

Preferably, the textured rice flake has a coarse flake. A coarse flake described herein refers to a flake with a size between about 2 and about 20 mm in length (wherein about is defined as ± 10%), as determined by visual measurement against a measuring device. The function is to provide a flaky texture with a white appearance.

Textured rice flake is generally present in the fish analogue at 50-70 % by weight of the fish analogue (i.e. uncoated fish analogue product), optionally 60-68 % and in some embodiments is present at 65 % by weight of the fish analogue. In some embodiments, the textured rice flake is present in the fish analogue in an amount greater than 50 % by weight of the fish analogue, or greater than 52 %, or greater than 54%, or greater than 56%, or greater than 58%, or greater than 60%, or greater than 62% by weight of the fish analogue. In some embodiments, the textured rice flake is present in the fish analogue in an amount less than 70%, or less than 68%, or less than 66% by weight of the fish analogue.

### Wheat gluten

Wheat gluten is selected for the fish analogue of the present invention because it has a number of important properties. Wheat gluten has a high protein content at about 60 - 95% of the wheat gluten. This is important to help increase the protein content of the fish analogue. Vegetarian and vegan diets benefit from having meat or fish substitute products that can provide suitable sources of protein. Wheat gluten is pale in appearance which is found to be important to mimic the appearance of white fish. Alternative plant-based protein sources are found not to have the required pale colour appearance.

Wheat gluten is also capable of forming a protein network or a protein structure matrix.

It is understood that this network/matrix is highly beneficial for the final texture and cohesion of the fish analogue. Wheat gluten hydrates in water and has a high water binding capacity (200-400%). The presence of water bound with the wheat gluten can assist with the moist succulent texture of the fish analogue. Importantly, the present inventors found that the wheat gluten could be used in place of a binder, and can be used to effectively bind all components of the fish analogue together to form a fish analogue with a cohesive and succulent mouthfeel. As a result, the use of wheat gluten may negate the need for other binders typically used in fish analogues, such as egg albumin or chemically modified cellulose-derived binders. Furthermore, wheat gluten is found to have emulsifying properties.

In some embodiments, the wheat gluten is powdered wheat gluten. The powdered wheat gluten may be a fine powder, that is, wherein 99% of the particles have a particle size of less than 0.25 mm which is as determined by sieving. The fine powder may assist in the preparation methods to produce the fish analogue.

Wheat gluten can be obtained from commercial sources, for example, Crespel and Deiters Group (https://crespeldeitersgroup.com/).

The wheat gluten has a number of functions. It serves as a binder for the fish analogue. It provides texture to the fish analogue. The wheat gluten also provides protein fortification.

Wheat gluten is generally present in the fish analogue at 7-20% by weight of the fish analogue, optionally 8-18 %, optionally 9-15%, optionally 9-12% and in some embodiments is present at 10% by weight of the fish analogue. In an embodiment, the wheat gluten is present in an amount greater than 7%, or greater than 8%, or greater than 9%, or greater than or equal to 10% by weight of the fish analogue. Lower amounts of wheat gluten (< 7 %) do not provide an adequate source of protein, while higher amounts of wheat gluten (> 20%) were found to have a detrimental effect on texture, with the fish analogue products becoming more chewy and less flaky.

### Plant Fibre

In some embodiments, the fish analogue comprises plant fibre. Plant fibre referred to herein refers to a fibre that is plant-derived. In some embodiments, the plant fibre may be a cereal fibre, bamboo fibre, or a fruit or vegetable fibre. In some embodiments, the fibre may be selected from wheat fibre, oat fibre, carrot fibre, bamboo fibre, apple fibre, citrus fibre, pea fibre, potato fibre, psyllium fibre. In some embodiments, the plant fibre is a cereal fibre, optionally selected from wheat fibre or oat fibre, or bamboo fibre. In preferred embodiments, the plant fibre is wheat fibre. The presence of plant fibre may help to bind the ingredients together, in combination with the wheat gluten. The presence of plant fibre may improve the binding of the components in the fish analogue as compared to wheat gluten alone. The presence of plant fibre may improve the nutritional properties of the fish analogue.

In some embodiments, cereal fibres and/or bamboo fibres may be preferred over fruit or vegetable fibres since they (i) have good oil and water binding properties, (ii) may be paler in colour, (iii) may be free of pectin, which may otherwise affect the texture of the fish analogue, and (iv) may provide a meat or fish analogue that has improved texture as compared to other vegetable fibres. The use of potato fibre, for example, may result in a meat or fish analogue with a more undesirable softer texture.

Wheat fibre, in particular, has a high water binding capacity (400-1250%), and a high oil binding capacity (300-1100%), and therefore effectively binds water and/or a plant-based oil.

In some embodiments, the plant fibre has a fibre length (i.e. the longest dimension of the fibre) between 80 microns to 500 microns, or from 150 microns to 250 microns, or 200 microns. The fibre length may be determined by optical microscopy in the range of 400 x to 1000 x magnification. These fibre lengths are found to have particularly good oil and water binding capacity. Wheat fibre can be obtained from commercial sources, for example, J. Rettenmaier & Söhne (https://www.jrs.eu/jrs_en). The present inventors found that smaller fibre lengths have reduced water and oil binding capacity, while longer fibre lengths can have a detrimental effect on texture.

In some embodiments, the plant fibre has a fibre length that is from 150 microns to 250 microns, or 200 microns. In some embodiments, the plant fibre has a fibre length that is greater than 80 microns, or greater than 100 microns, or greater than 120 microns, or greater than 140 microns, or greater than 160 microns, or greater than 180 microns. In some embodiments, the plant fibre has a fibre length that is less than 500 microns, or less than 450 microns, or less than 400 microns, or less than 350 microns, or less than 300 microns, or less than 275 microns, or less than 250 microns, or less than 225 microns.

In some embodiments, the fish analogue comprises from 0.25 to 5 % plant fibre by weight of the fish analogue, or from 0.35 to 1.25 % plant fibre, or 0.5 to 1 %, or 0.75 % plant fibre by weight of the fish analogue. In a preferred embodiment, the plant fibre is wheat fibre. Too little plant fibre (< 0.25 %) has reduced water and oil binding capacity, while too much fibre may lead to a product that is too firm in texture.

In some embodiments, the fish analogue comprises greater than 0.25% plant fibre by weight of the fish analogue, or greater than 0.5% plant fibre, or greater than 0.7% plant fibre by weight of the fish analogue. In some embodiments, the fish analogue comprises less than 5% plant fibre by weight of the fish analogue or less than 4% plant fibre, or less than 3% plant fibre, or less than 2% plant fibre, or less than 1% plant fibre by weight of the fish analogue. In a preferred embodiment, the plant fibre is wheat fibre.

The plant fibre preferably comprises insoluble fibres. In some embodiments, the plant fibre comprises at least about 96 % insoluble fibres by weight of the plant fibre.

In some embodiments, the ratio of wheat gluten to plant fibre in the fish analogue is from 7:1 to 30:1, optionally from 10:1 to 15:1, or 13:1. In some embodiments, the ratio of wheat gluten to plant fibre in the fish analogue is greater than 7:1, or greater than 8:1, or greater than 9:1, or greater than 10:1, or greater than 11:1, or greater than 12:1. In some embodiments, the ratio of wheat gluten to plant fibre in the fish analogue is less than 20:1, or less than 19:1, or less than 18:1, or less than 17:1, or less than 16:1, or less than 15:1, or less than 14:1. These ratios are found to provide a good balance of component binding, bite texture and protein fortification.

### Further ingredients

In some embodiments, the fish analogue comprises from 10 to 25 % water by weight of the fish analogue, or from 12 to 20 % water, or 14% water by weight of the fish analogue. In some embodiments, the fish analogue comprises greater than 10% water by weight of the fish analogue, or greater than 11% water, or greater than 12% water, or greater than 13% water by weight of the fish analogue. In some embodiments, the fish analogue comprises less than 20% water by weight of the fish analogue, or less than 19% water, or less than 18% water, or less than 17% water, or less than 16% water, or less than 15% water by weight of the fish analogue. The amount of water added is selected to provide the fish analogue with an appropriate texture and optionally appropriate succulence.

In some embodiments, the fish analogue comprises a plant-based oil. The plant-based oil may be selected from rapeseed oil, sunflower oil, olive oil or grapeseed oil or a combination thereof. In a preferred embodiment, the plant-based oil is rapeseed oil. Rapeseed oil is light in colour and has a preferential flavour profile to compliment this application. Rapeseed oil also advantageously provides a source of omega 3 fatty acids. Other plant-based oils at levels greater than 5% by weight of the fish analogue, like flaxseed and hempseed oil, can add a nutty flavour note which may not be desirable in this application. In an embodiment, the fish analogue may further comprise algae oil, i.e., in combination with a plant-based oil selected from rapeseed oil, sunflower oil, olive oil or grapeseed oil.

In some embodiments, the fish analogue comprises from 5 to 15 % plant-based oil by weight of the fish analogue, or from 6 to 13%, or from 7 to 12% plant-based oil, or 7.5% plant-based oil by weight of the fish analogue. The oil addition assists in the creation of a succulent mouth feel. Preferred ranges are selected because higher amounts of oil can result in a greasy coating in the mouth when eating; and lower amounts of oil can have a negative impact on the texture and also the creation of the emulsion during processing. In some embodiments, the fish analogue comprises greater than about 5% plant-based oil by weight of the fish analogue, or greater than 6% plant-based oil, or greater than about 7% plant-based oil by weight of the fish analogue. In some embodiments, the fish analogue comprises less than 12% plant-based oil by weight of the fish analogue, or less than 11% plant-based oil, or less than 10% plant-based oil, or less than 9% plant-based oil, or less than 8% plant-based oil by weight of the fish analogue. The plant-based oil delivers flavour and may contribute to the succulent texture and good mouth-feel of the fish analogue.

In some embodiments, the fish analogue comprises flavourings. In some embodiments, the flavouring may be powdered flavourings. In preferred embodiments, the flavourings are fish flavouring. In some embodiments, the flavourings include one or more of natural flavouring preparations, sunflower seed oil, sugar and/or maltodextrin (potato and corn). In some embodiments, the fish analogue comprises up to 2.5% flavourings. In some embodiments, the fish analogue comprises from 1.5 to 2.5 % flavourings by weight of the fish analogue, or from 1.75 to 2.4% flavourings, or 1.8 to 2.2% flavourings, or 1.96% flavourings by weight of the fish analogue. In some embodiments, the fish analogue comprises greater than 1.5% flavourings by weight of the fish analogue, or greater than 1.75% flavourings by weight of the fish analogue. In some embodiments, the fish analogue comprises less than 2.5% flavouring by weight of the fish analogue, or less than 2.4% flavourings, or less than 2.3% flavourings, or less than 2.2 % flavourings, or less than 2.1% flavourings, or less than 2% flavourings by weight of the fish analogue.

In some embodiments, the fish analogue comprises salt. Salt described herein may refer to sodium chloride (NaCl). In some embodiments, the fish analogue comprises up to 3% salt by weight of the fish analogue. In some embodiments, the fish analogue comprises from 1 to 3 % salt by weight of the fish analogue, or from 1 to 1.5 % salt, or 1.17% salt by weight of the fish analogue. In some embodiments, the fish analogue comprises greater than 1% salt by weight of the fish analogue, or greater than 1.15% salt by weight of the fish analogue. In some embodiments, the fish analogue comprises less than 3% salt by weight of the fish analogue, or less than 2.5 % salt, or less than 2% salt, or less than 1.5%, or less than 1.25% salt by weight of the fish analogue. The presence of salt may enhance the flavour of the product.

In some embodiments, the fish analogue may comprise an additional protein source (i.e. different to wheat gluten), for example, a powdered protein source. The additional protein source may be present in an amount up to 15% by weight of the fish analogue. In some embodiments, the fish analogue comprises from 1 to 15 % additional protein source by weight of the fish analogue.

In some embodiments, the fish analogue comprises an omega-3 fatty acid, for example, one or more of docosahexaenoic acid (DHA), eicosapentaenoic acid (EPA) and ALA (alpha-linolenic acid). In some embodiments, the fish analogue comprises at least 0.3g, or at least 0.35g or at least 0.4g or at least 0.45g alpha-linolenic acid per 100g and per 100kcal, or at least 40mg, or at least 45mg, or at least 50mg of the sum of eicosapentaenoic acid and docosahexaenoic acid per 100g and per 100kcal.The inclusion of omega-3 fatty acids can be used to more closely emulate the nutritional benefits obtained from eating white fish. The inclusion of omega-3 fatty acids may not significantly alter the texture and/or appearance of the fish analogue. In some embodiments, the omega-3 fatty acids can be provided by rapeseed oil. In some embodiments, the omega-3 fatty acids can be provided by the presence of algae oil.

### Food product

The present invention also provides for a food product comprising the fish analogue described herein and a coating, wherein the coating is selected from a coating comprising a batter layer or a coating comprising a crumb layer.

In an embodiment, the food product is a fish portion analogue, a fish finger analogue, a fishcake analogue or a fish fillet analogue.

In an embodiment, the food product is a chilled food product or a frozen food product, that is, a food product that is suitable for chilling or freezing respectively.

### Properties and Nutritional Content

In an embodiment, the fish analogue has the texture of white fish. This may be determined by sensory evaluation and/or consumer testing.

In an embodiment, the fish analogue has the appearance of white fish. For example, the fish analogue has the same colour as white fish, which may be determined by appearance and/or consumer evaluation.

The fish analogues described herein may have good or improved protein content as compared to other fish analogues, while still advantageously having the texture and appearance of white fish. In an embodiment, the protein content is at least 7.5% by weight of the fish analogue, or at least 8 %, or at least 9%, or at least 10% by weight of the fish analogue.

The fish analogues of the present invention may have good or improved fibre content, while still advantageously having the texture and appearance of white fish. In an embodiment, the fibre content is at least 2% by weight of the fish analogue The fish analogues of the present invention may have improved and balanced nutritional properties, which is particularly important for consumers that have a vegan and/or vegetarian diet.

### Free of ingredients from an animal origin and/or synthetic cellulose-derived products and/or allergens

The fish analogues of the present invention do not comprise an ingredient from an animal origin, for example, the fish analogues of the present invention do not contain any meat and/or dairy products. The fish analogues of the present invention are free of egg albumin, which is often used as a binder in known meat or fish analogues. The products of the present invention are suitable for consumers with a vegetarian diet.

In an embodiment, the fish analogue of the present invention is plant-based or plant-derived. The products of the present invention may therefore be suitable for consumers with a vegan diet. In an embodiment, the fish analogue of the present invention does not comprise fungus-derived protein, such as mycoprotein. In an embodiment, the fish analogue of the present invention does not comprise soy protein. In an embodiment, the fish analogue of the present invention does not contain nuts. This may be advantageous, for example, for consumers that are allergic to mycoprotein, nuts and/or soy protein. Products containing plant proteins other than soy protein are considered to be more sustainable and environmentally friendly due to the link between farming of soy protein and deforestation.

In some embodiments, the fish analogue is free of chemically modified or synthetic cellulose-derived products, which are often used as binders in known meat or fish analogues. In some embodiments, the fish analogue is free of microcrystalline cellulose (E460), methyl cellulose (E461), ethyl cellulose (E462), hydroxypropyl cellulose (E463), hydroxylpropyl methyl cellulose (E464), ethyl methyl cellulose (E465), sodium Carboxy Methyl Cellulose (E466), Cross-linked Carboxy Methyl Cellulose (E468), Enzymatically Hydrolysed Carboxy Methyl Cellulose (E469) and Hydroxyethyl Cellulose (E1525). In an embodiment, the fish analogue may be free of modified starches or starch derivatives. Consumers are increasingly looking at minimising their intake of artificial or chemically modified additives. The fish analogues described herein therefore provide a more natural and label-friendly product while still having good texture and appearance. In some embodiments, the fish analogue is free of E-numbers of artificial additives. A product free of chemically modified or synthetic cellulose-derived products may also be advantageous because cellulose-derived binders have a known laxative effect.

In some embodiments, the fish analogue is free of palm oil. This may provide a healthier fish analogue that is low in saturated fats.

### Method

The present invention also provides for a method of producing a fish analogue that does not comprise an ingredient from an animal origin, the method comprising:
(a) mixing together plant-based oil, flavourings and water until evenly distributed,
(b) adding wheat gluten and optionally plant fibre and mixing until evenly distributed and an emulsion formed,
(c) adding textured rice flake and mixing,
wherein the fish analogue comprises from about 50% to about 70% by weight textured rice flake, and from about 7% to about 20% by weight wheat gluten.

Also disclosed herein, but not forming part of the invention is a fish analogue prepared by the above-mentioned method. Evenly distributed referred to herein refers to said components being mixed until homogenous.

The pre-blending of the mixture with wheat gluten and optionally plant fibre, before adding the textured rice flake is found to produce a fish analogue with an improved texture and a lighter material, as compared to without a pre-blending step.

In a preferred embodiment, the textured rice flake is frozen before adding to the mixture.

In some embodiments, the mixing in step (a) is performed at medium shear. The mixing in step (a) can be performed for at least 20 - 50 seconds, at least 25 - 40 seconds, for example, 30 seconds.

In some embodiments, steps (b) and/or (c) occur in a bowl chopper. The bowl chopper consists of a rotating bowl with a series of rotating knives running in a vertical plane in the trough of the bowl. The knife head speed can be varied, as can the rotation speed of the bowl. They offer the advantage over other systems that the mixing and comminution step can be accomplished in one operation. In steps (b) and/or (c) the mixture is preferably rotated. In some embodiments, the mixing in steps (b) and/or (c) are performed at low shear. The mixing in step (b) and/or (c) can be performed for at least 20 - 50 seconds, at least 25 - 40 seconds, for example, 30 seconds.

In some embodiments, steps (b) and/or (c) occur at a temperature of -10 to 10 °C, and more preferably at a temperature of -2 to 3 °C. In some embodiments, steps (b) and/or (c) may be performed at a temperature less than 10 °C, or less than 9 °C, or less than 8 °C, or less than 7 °C, or less than 6 °C, or less than 5 °C, or less than 4 °C, or less than 3 °C, or less than 2 °C. A low temperature may be important for preventing moisture release from the textured rice flake, which may be preferably added in frozen form. Moisture release may cause the texture rice flake to soften, increasing the likelihood of the material to be broken down during the manufacturing process which would be disadvantageous to the final product. A low temperature may also be beneficial for microbiological control.

In some embodiments, after adding and mixing the textured rice flake, the fish analogue mixture is formed into a fish analogue unit, for example, by cutting. In some embodiments, the fish analogue is cut into finger planks or rectangles. The fish analogue unit, finger planks or rectangles may resemble fish fingers.

In some embodiments, the fish analogue unit is coated. In some embodiments, the fish analogue may be coated with a batter layer or a crumb layer, for example, using a batter or crumb mixture. In some embodiments, the fish analogue unit is coated twice with the batter or crumb mixture.

In some embodiments, after coating, the coated fish analogue unit is fried. In some embodiments, the coated fish analogue is fried at a temperature from 180 °C to 210 °C, for example, 195 °C. The frying step may be performed for 30 seconds to 55 seconds, optionally 45 seconds.

In some embodiments, after frying, the coated fish analogue unit is chilled or frozen, or is suitable for chilling or being frozen.

### Use of wheat gluten

The present invention also provides for the use of wheat gluten to increase the protein content of a fish analogue that does not comprise an ingredient from an animal origin, the method comprising
(a) adding wheat gluten and optionally plant fibre to a pre-blend mix comprising plant oil, flavourings and water,
(b) blending mixture from (a) to form an emulsion, and
(c) adding textured rice flake,
(d) blending mixture from (c), and
(e) forming the mixture into fish analogue units,
wherein the fish analogue comprises from 7% to 20% by weight of the wheat gluten and the protein content is at least 7.5% by weight of the fish analogue.

### Preferred Compositions

In an embodiment, the fish analogue comprises from 50 to 70 % textured rice flake, or from 60 to 68% textured rice flake, from 7 to 20 % wheat gluten, or from 9 to 15% wheat gluten, from 10 to 25% water from 5 to 15% plant-based oil, or from 7 to 12% plant-based oil, optionally rapeseed oil from 0.25 to 5% plant fibre, optionally wheat fibre up to about 2.5% flavourings, or from 1.75 to 2.4 % flavourings up to 3% salt, or from 1 to 1.5% salt, wherein % are by weight of the fish analogue.

### Examples

### Example 1 - Preparing a fish analogue (lab scale)

### Equipment

Kenwood mixer (standard kitchen model), Scales, Spatula

**Ingredients table**

| **INGREDIENT** | **PERCENTAGE** | **QUANTITY (IN KG)** |
|---|---|---|
| Textured Rice flake (coarse) | 64.99 | 0.650 |
| Water | 13.78 | 0.138 |
| Rapeseed oil | 7.48 | 0.075 |
| Salt | 1.18 | 0.012 |
| Wheat Gluten | 9.85 | 0.098 |
| Wheat Fibre | 0.75 | 0.007 |
| Flavour powder | 1.97 | 0.020 |
| **TOTAL** | **100** | **1.0kg** |

1. Remove the rice flake from the freezer to temper whilst preparing the mix
2. Pre-blend in the mixer the flavour powder and the salt together on medium shear to evenly distribute the flavour powder
3. Into the mixer add all the rapeseed oil and water on low shear for approx. 30 seconds until fully combined
4. Add all the wheat gluten and wheat fibre to the mixer. Mix on low shear for approx. 30 seconds to form the emulsion. If needed, a spatula may be used to scrape any mixture of the sides of the bowl back into the mix
5. Add the textured rice flake into the emulsion and mix on low shear for approx. 30 seconds until fully combined.
6. Check the temperature of the mixture, this should be roughly -1°C ± a few degrees

The core mixture was cut to size, coated, and fried at a temperature of 195 °C. The final products are suitable for chilling or for freezing.

### Testing

The example fish analogue was found to have a good texture, resembling fish, as determined by sensory evaluation. Notably, the example fish analogue also demonstrated a white colour and good appearance. This is demonstrated by a fish analogue in accordance with the present invention, which is shown in Figure 1.

Furthermore, it was found that the wheat gluten, aided by wheat fibre, could effectively bind the components of the fish analogue together to form a fish analogue with a cohesive texture.

### Rice Flake Size Distribution

The size distribution of the textured rice flake was investigated to see which size distribution demonstrated the best properties. A fish analogue according to Example 1 comprising 100% coarse textured rice flake was compared with two example fish analogues comprising either i) 50% coarse and 50% fine textured rice flake and ii) 75% coarse and 25% fine textured rice flake. Fine textured rice flake, described herein, refers to a rice flake that has a smaller rice flake size and distribution compared to coarse textured rice flake.

It was found that fish analogues comprising larger rice flakes had both a better textural profile and a flakier appearance, with the fish analogue comprising 100% coarse flake demonstrating the best properties.

### Comparative Examples

A comparative product similar to Example 1 was prepared, wherein the 9.85% wheat gluten was replaced with 9% pea protein isolate. The resultant product did not demonstrate the same properties as the product formed using wheat gluten. Notably, the fish analogue core was beige in colour and too dark to resemble white fish. In addition, the texture of the comparative Example was powdery and chalky.

A second comparative product comprising a combination of wheat gluten at 4.8% and pea protein isolate at 2% was also trialled however the resultant product demonstrated an unpleasant off taste from the pea protein, which also had a negative impact on the texture. As a result this created a chalky mouth feel and darkened the overall colour of the analogue. The mix also failed to produce a source of protein nutrition claim

In addition, other materials such as rice protein isolate at 10% were trialled to bind the materials and also provide a source of protein nutrition claim. The results observed in the finished products matched those as seen when using pea protein isolate, having a negative impact on texture and colour.

### Commercial Award

Since the priority date of this application, a product according to the invention "BirdsEye *Green Cuisine* Fishless Fingers" won a "Top Launch" award as part of the Top Products Survey 2021 by the publication "The Grocer". This is indicative both of the long-felt want of alternative fish products, and the product's commercial success.

## Claims

1. A fish analogue comprising from 50% to 70% by weight textured rice flake, and from 7% to 20% by weight wheat gluten, and wherein the fish analogue does not comprise an ingredient from an animal origin.

2. The fish analogue according to claim 1, wherein the fish analogue is plant-based.

3. The fish analogue according to any preceding claim, wherein the protein content is at least 7.5% by weight of the fish analogue, optionally at least 10% by weight of the fish analogue.

4. The fish analogue according to any preceding claim, wherein the textured rice flake is from 60% to 68% by weight of the fish analogue.

5. The fish analogue according to any preceding claim, wherein the wheat gluten is from 9% to 15% by weight of the fish analogue.

6. The fish analogue according to any preceding claim, wherein the fish analogue comprises an omega-3 fatty acid.

7. The fish analogue according to any preceding claim, further comprising one or more of a plant fibre, a plant-based oil, flavourings and/or salt.

8. The fish analogue according to any preceding claim, further comprising plant fibre, optionally wheat fibre, in an amount from 0.25 to 5% by weight of the fish analogue.

9. The fish analogue according to any preceding claim, comprising
from 50 to 70 % textured rice flake,
from 7 to 20 % wheat gluten,
from 10 to 25% water
from 5 to 15% plant-based oil, optionally rapeseed oil
from 0.25 to 5% plant fibre, optionally wheat fibre
up to 2.5% flavour,
up to 3% salt,
wherein % are by weight of the fish analogue.

10. The fish analogue according to any preceding claim, wherein the fish analogue is free of microcrystalline cellulose (E460), methyl cellulose (E461), ethyl cellulose (E462), hydroxypropyl cellulose (E463), hydroxylpropyl methyl cellulose (E464), ethyl methyl cellulose (E465), sodium Carboxy Methyl Cellulose (E466), Cross-linked Carboxy Methyl Cellulose (E468), Enzymatically Hydrolysed Carboxy Methyl Cellulose (E469) and Hydroxyethyl Cellulose (E1525).

11. A food product comprising the fish analogue according to any one of claims 1 to 10 and a coating, wherein the coating is selected from a coating comprising a batter layer or a coating comprising a crumb layer.

12. A method of producing a fish analogue that does not comprise an ingredient from an animal origin, the method comprising:
(a) mixing together plant-based oil, flavourings and water until evenly distributed,
(b) adding wheat gluten and optionally plant fibre and mixing until evenly distributed and an emulsion is formed, and
(c) adding textured rice flake and mixing,
wherein the fish analogue comprises from 50% to 70% by weight textured rice flake, and from 7% to 20% by weight wheat gluten.

13. The method of claim 12, wherein steps (b) and (c) occur in a bowl chopper and/or at a temperature of -10 to 10°C.

14. Use of wheat gluten to increase the protein content of a fish analogue that does not comprise an ingredient from an animal origin, the use comprising
(a) adding wheat gluten and optionally plant fibre to a pre-blend mix comprising plant oil, flavourings and water,
(b) blending mixture from (a) to form an emulsion, and
(c) adding textured rice flake,
(d) blending mixture from (c), and
(e) forming the mixture into fish analogue units,
wherein the fish analogue comprises from 7% to 20% by weight of the wheat gluten and the protein content is at least 7.5% by weight of the fish analogue.

## Patentansprüche

1. Fischanalog, umfassend 50 bis 70 Gew.-% texturierte Reisflocken und 7 bis 20 Gew.-% Weizengluten und wobei das Fischanalog keinen Inhaltsstoff tierischen Ursprungs umfasst.

2. Fischanalog nach Anspruch 1, wobei das Fischanalog pflanzlich ist.

3. Fischanalog nach einem der vorhergehenden Ansprüche, wobei der Proteingehalt mindestens 7,5 Gew.-% des Fischanalogs, optional mindestens 10 Gew.-% des Fischanalogs beträgt.

4. Fischanalog nach einem der vorhergehenden Ansprüche, wobei die texturierten Reisflocken 60 bis 68 Gew.-% des Fischanalogs betragen.

5. Fischanalog nach einem der vorhergehenden Ansprüche, wobei das Weizengluten 9 bis 15 Gew.-% des Fischanalogs beträgt.

6. Fischanalog nach einem der vorhergehenden Ansprüche, wobei das Fischanalogon eine Omega-3-Fettsäure umfasst.

7. Fischanalog nach einem der vorhergehenden Ansprüche, ferner umfassend eine oder mehrere Pflanzenfasern, ein Öl auf Pflanzenbasis, Aromastoffe und/oder Salz.

8. Fischanalog nach einem der vorhergehenden Ansprüche, ferner umfassend Pflanzenfasern, optional Weizenfasern, in einer Menge von 0,25 bis 5 Gew.-% des Fischanalogs.

9. Fischanalog nach einem der vorhergehenden Ansprüche, umfassend:
50 bis 70 % texturierte Reisflocken,
7 bis 20 % Weizengluten,
10 bis 25 % Wasser
5 bis 15 % Öl auf Pflanzenbasis, optional Rapsöl
0,25 bis 5 % Pflanzenfaser, optional Weizenfaser
bis zu 2,5 % Aromastoffe,
bis zu 3 % Salz,
wobei sich % auf das Gewicht des Fischanalogs beziehen.

10. Fischanalog nach einem der vorhergehenden Ansprüche, wobei das Fischanalog frei von mikrokristalliner Cellulose (E460), Methylcellulose (E461), Ethylcellulose (E462), Hydroxypropylcellulose (E463), Hydroxypropylmethylcellulose (E464), Ethylmethylcellulose (E465), Natriumcarboxymethylcellulose (E466), vernetzter Carboxymethylcellulose (E468), enzymatisch hydrolysierter Carboxymethylcellulose (E469) und Hydroxyethylcellulose (E1525) ist.

11. Lebensmittelprodukt, umfassend das Fischanalog nach einem der Ansprüche 1 bis 10 und eine Hülle, wobei die Hülle aus einer Hülle, die eine Teigschicht umfasst, oder einer Hülle, die eine Krümelschicht umfasst, ausgewählt ist.

12. Verfahren zum Herstellen eines Fischanalogs, das keinen Inhaltsstoff tierischen Ursprungs umfasst, wobei das Verfahren Folgendes umfasst:
(a) Mischen von Öl auf Pflanzenbasis, Aromastoffe und Wasser, bis zur gleichmäßigen Verteilung,
(b) Zugeben von Weizengluten und optional Pflanzenfasern und Mischen bis zur gleichmäßigen Verteilung und bis eine Emulsion gebildet ist, und
(c) Zugeben von texturierten Reisflocken und Mischen,
wobei das Fischanalog 50 bis 70 Gew.-% texturierte Reisflocken und 7 bis 20 Gew.-% Weizengluten umfasst.

13. Verfahren nach Anspruch 12, wobei die Schritte (b) und (c) in einem Kutter und/oder bei einer Temperatur von -10 bis 10 °C erfolgen.

14. Verwendung von Weizengluten zum Erhöhen des Proteingehalts eines Fischanalogs, das keinen Inhaltsstoff tierischen Ursprungs umfasst, wobei die Verwendung Folgendes umfasst:
(a) Zugeben von Weizengluten und optional Pflanzenfasern zu einer Vormischung, die Pflanzenöl, Aromastoffe und Wasser umfasst,
(b) Mischen der Mischung aus (a), um eine Emulsion zu bilden, und
(c) Zugeben texturierter Reisflocken,
(d) Mischen der Mischung aus (c) und
(e) Formen der Mischung zu Fischanalogeinheiten,
wobei das Fischanalog zu 7 bis 20 Gew.-% Weizengluten umfasst und der Proteingehalt mindestens 7,5 Gew.-% des Fischanalogs beträgt.

## Revendications

1. Analogue de poisson comprenant de 50 % à 70 % en poids de flocons de riz texturés et de 7 % à 20 % en poids de gluten de blé, et dans lequel l'analogue de poisson ne comprend pas d'ingrédient d'origine animale.

2. Analogue de poisson selon la revendication 1, dans lequel l'analogue de poisson est à base de plantes.

3. Analogue de poisson selon une quelconque revendication précédente, dans lequel la teneur en protéines est d'au moins 7,5 % en poids de l'analogue de poisson, éventuellement d'au moins 10 % en poids de l'analogue de poisson.

4. Analogue de poisson selon une quelconque revendication précédente, dans lequel les flocons de riz texturés représentent de 60 % à 68 % en poids de l'analogue de poisson.

5. Analogue de poisson selon une quelconque revendication précédente, dans lequel le gluten de blé représente de 9 % à 15 % en poids de l'analogue de poisson.

6. Analogue de poisson selon une quelconque revendication précédente, dans lequel l'analogue de poisson comprend un acide gras oméga-3.

7. Analogue de poisson selon une quelconque revendication précédente, comprenant en outre un ou plusieurs éléments parmi une fibre végétale, une huile végétale, des arômes et/ou du sel.

8. Analogue de poisson selon une quelconque revendication précédente, comprenant en outre des fibres végétales, éventuellement des fibres de blé, en une quantité de 0,25 à 5 % en poids de l'analogue de poisson.

9. Analogue de poisson selon une quelconque revendication précédente, comprenant
de 50 à 70 % de flocons de riz texturés,
de 7 à 20 % de gluten de blé,
de 10 à 25 % d'eau
de 5 à 15 % d'huile végétale, éventuellement d'huile de colza
de 0,25 à 5 % de fibres végétales, éventuellement de fibres de blé
jusqu'à 2,5 % d'arôme,
jusqu'à 3 % de sel,
dans lequel les pourcentages sont des pourcentages en poids de l'analogue de poisson.

10. Analogue de poisson selon une quelconque revendication précédente, dans lequel l'analogue de poisson est exempt de cellulose microcristalline (E460), de méthylcellulose (E461), d'éthylcellulose (E462), d'hydroxypropylcellulose (E463), d'hydroxypropylméthylcellulose (E464), d'éthylméthylcellulose (E465), de carboxyméthylcellulose sodique (E466), de carboxyméthylcellulose réticulée (E468), de carboxyméthylcellulose hydrolysée par voie enzymatique (E469) et d'hydroxyéthylcellulose (E1525).

11. Produit alimentaire comprenant l'analogue de poisson selon l'une quelconque des revendications 1 à 10 et un enrobage, dans lequel l'enrobage est choisi parmi un enrobage comprenant une couche de pâte ou un enrobage comprenant une couche de chapelure.

12. Procédé de production d'un analogue de poisson qui ne comprend pas d'ingrédient d'origine animale, le procédé comprenant :
(a) le mélange de l'huile végétale, des arômes et de l'eau jusqu'à ce qu'ils soient uniformément répartis,
(b) l'ajout de gluten de blé et éventuellement de fibres végétales et le mélange jusqu'à ce qu'ils soient uniformément répartis et qu'une émulsion se forme, et
(c) l'ajout de flocons de riz texturés et le mélange,
dans lequel l'analogue de poisson comprend de 50 % à 70 % en poids de flocons de riz texturés, et de 7 % à 20 % en poids de gluten de blé.

13. Procédé selon la revendication 12, dans lequel les étapes (b) et (c) sont réalisées dans un hachoir à bol et/ou à une température de -10 à 10°C.

14. Utilisation de gluten de blé pour augmenter la teneur en protéines d'un analogue de poisson qui ne comprend pas d'ingrédient d'origine animale, l'utilisation comprenant
(a) l'ajout de gluten de blé et éventuellement de fibres végétales à un mélange de prémélange comprenant de l'huile végétale, des arômes et de l'eau,
(b) le mélange du mélange obtenu en (a) pour former une émulsion, et
(c) l'ajout de flocons de riz texturés,
(d) le mélange du mélange obtenu en (c), et
(e) la formation du mélange en unités d'analogues de poisson,
dans lequel l'analogue de poisson comprend de 7 % à 20 % en poids de gluten de blé et la teneur en protéines est d'au moins 7,5 % en poids de l'analogue de poisson.
